# EUROPÄISCHE PATENTSCHRIFT

(11) **EP 0 657 027 B1**
(45) Veröffentlichungstag und Bekanntmachung des Hinweises auf die Patenterteilung: **12.03.1997**
(21) Anmeldenummer: 93915689.9
(22) Anmeldetag: 04.08.1993
(51) Int. Cl.: G01N 27/414

(54) **ANORDNUNG ZUR MESSUNG VON IONENKONZENTRATIONEN IN LÖSUNGEN**
DEVICE FOR MEASURING THE CONCENTRATION OF IONS IN SOLUTIONS
DISPOSITIF PERMETTANT DE MESURER LA CONCENTRATION D'IONS DANS DES SOLUTIONS

(30) Priorität: 28.08.1992 DE 4228609
(43) Veröffentlichungstag der Anmeldung: 14.06.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: KRAUSS, Mathias, D-72119 Ammerbuch (DE); HILDEBRANDT, Beate, D-19300 Muchow (DE); KUNATH, Christian, D-01099 Dresden (DE); KURTH, Eberhard, D-01129 Dresden (DE)
(86) Internationale Anmeldenummer: DE9300690
(87) Internationale Veröffentlichungsnummer: WO9406005

(56) Entgegenhaltungen:
- DE-A- 3 216 791
- DE-C- 3 827 314
- FR-A- 2 516 656
- GB-A- 2 166 904
- US-A- 4 385 274

## Beschreibung

### Technisches Gebiet:

Die Erfindung betrifft eine Anordnung zur Messung von lonenkonzentrationen in Lösungen mit ionensensitiven Feldeffekttransistoren (ISFETs).

Es besteht ein zunehmender Bedarf an Anordnungen zur Bestimmung von Ionenkonzentrationen, wobei vor allem im Bereich der Biomedizin, z.B. für Messungen an Blut oder Urin, Anordnungen gewünscht werden, die auf kleinstem Raum integrierbar sind.
Die Funktion chemischer Sensoren auf der Grundlage von ionensensitiven Feldeffekttransistoren basiert auf der Veränderung der Schwellspannung eines ISFET in Abhängigkeit von der Ionenkonzentration in flüssigen Elektrolyten. Die Aufgabe einer Schaltungsanordnung zur Bestimmung der lonenkonzentration mit ISFETs beschränkt sich damit auf eine Schwellspannungsmessung. Dabei liegt die Schwierigkeit u.a. darin, daß bei realen ISFETs das erwünschte Sensorsignal auch eine starke Abhängigkeit von verschiedenen Umgebungseinflüssen aufweist sowie durch alterungsbedingte Schwellspannungsdriften beeinflußt wird.

### Stand der Technik:

Eine verbreitete Methode zur Bestimmung der Ionenkonzentration ist die Messung der Schwellspannungsdifferenz zwischen einem ISFET und einem Referenz-MOSFET, die in einer gegengekoppelten Differenzverstärkeranordnung arbeiten. Mit dieser Methode können jedoch nur die parasitären Schwellspannungseinflüsse kompensiert werden, die durch die MOSFET-Anordnung selbst verursacht werden, so daß z.B. äußere Einflüsse, die auf MOSFET und ISFET unterschiedlich wirken, zu Fehlmessungen führen (Arbeitspunktabhängigkeit der Schwellspannung). Nachteilig ist weiterhin, daß die Anordnung nur in einem engen Bereich um den vorgeschriebenen Arbeitspunkt funktionsfähig ist, so daß technologische sowie betriebsbedingte Parameterschwankungen nicht ausgleichbar sind. Wesentlich bessere Ergebnisse sind zu erzielen, wenn die Schwellspannungsdifferenz zweier unterschiedlich empfindlicher ISFETs ausgewertet wird. Der Einsatz unterschiedlich empfindlicher ISFETs setzt die technologische Beherrschung unterschiedlich sensitiver Schichten beim Herstellungsprozeß voraus (siehe z.B. Isemi Igarashi et al: Multiple lon Sensor Array, Sensors and Actuators, B1 (1990) 8-11). Die Messung dieser Schwellspannungsdifferenz ist nicht mehr in der vorher geschilderten Weise in einem einfachen Differenzverstärker möglich, da die beiden ISFETs einen gemeinsamen Gateanschluß in der elektrolytischen Lösung haben.
Die in "A. Sibbald: A Chemical-Sensitive Integrated-Circuit: The Operational Transducer, Sensors and Actuators, 7 (1985) 23-28" auf Seite 27 beschriebene Subtrahierverstärkeranordnung hat den Nachteil, daß in das Meßergebnis weitere schaltungsbedingte Größen eingehen, und daß vom Ausgangssignal der Schaltung über den Arbeitspunktstrom auf das eigentliche Sensorsignal zurückgerechnet werden muß. Ein weiterer Nachteil ist, daß die beiden FETs zwangsläufig an verschiedenen Arbeitspunkten betrieben werden, so daß eine Kompensation von Umgebungseinflüssen mit dieser Schaltung nicht möglich ist.
In der DE 3216791 ist eine Anordnung zur Messung der lonenkonzentration mit unterschiedlich sensitiven ISFETs beschrieben, bei der der Drainstrom der ISFETs durch Nachregeln der Gatespannung konstant gehalten und die dafür nötige Spannungsänderung ausgewertet wird. Die vorgeschlagene Anordnung hat den Nachteil, daß Störgrößen, die z.B. durch den Verstärker selbst oder durch betriebsbedingte oder technologische Toleranzen verursacht sein können, nicht ausgleichbar sind. Die für die fehlerfreie Funktion der Anordnung notwendige Voraussetzung, daß die Differenz der Steilheiten der ISFETs konstant sein muß, kann bei realen ISFETs i.a. nicht gewährleistet werden, so daß sich dadurch eine zusätzliche Fehlerquelle ergibt.

### Darstellung der Erfindung:

Aufgabe der vorliegenden Erfindung ist es, eine Schaltungsanordnung anzugeben, mit der die Schwellspannungsdifferenz zweier für die zu messende lonensorte unterschiedlich oder gleich empfindlicher ISFETs direkt und unabhängig von technologisch bedingten Toleranzen, betriebsbedingten Parameterschwankungen und Umgebungseinflüssen als analoge Ausgangsspannnung bereitgestellt werden kann, und die die Prüfung von ISFETs auf identische Parameter ermöglicht.

Die Aufgabe wird erfindungsgemäß durch eine Schaltungsanordnung gelöst, die aus zwei Meßverstärkern besteht. In den Eingangsstufen dieser Meßverstärker sind jeweils zwei ISFETs und zwei identische FETs so verschaltet, daß die Ausgangsspannung des ersten Meßverstärkers der Differenz aus dem Mittelwert der beiden ISFET-Schwellspannungen und der FET-Schwellspannung und die Ausgangsspannung des zweiten Meßverstärkers der Differenz der beiden lSFET-Schwellspannungen dieses Verstärkers entspricht. Am Ausgang des ersten Meßverstärkers stellt sich somit stets die Offsetspannung der Gesamtanordnung ein, die sich z.B. aufgrund äußerer Einflüsse zeitlich verändern kann. Durch Verbinden des Ausgangs des ersten Meßverstärkers mit der gemeinsamen Referenzelektrode der vier ISFETs wird der Arbeitspunkt des zweiten Meßverstärkers festgelegt. Damit wird erreicht, daß die Differenzbildung im zweiten Meßverstärker immer symmetrisch zu dem durch den ersten Meßverstärker festgelegten Arbeitspunkt erfolgt. Die Ausgangsspannung des zweiten Meßverstärkers stellt das Sensorsignal dar, d.h. die Schwellspannungsdifferenz zweier ISFETs, wobei für eine fehlerfreie Messung die ISFETs und FETs des ersten Meßverstärkers identisch denen des zweiten Meßverstärkers sein müssen. Die in dieser Schaltung eingesetzten FETs können z.B. MOSFETs sein.

Mit der erfindungsgemäßen Schaltungsanordnung läßt sich die Schwellspannungsdifferenz zweier ISFETs direkt, d.h. z.B. ohne zusätzlichen Rechenaufwand, als analoge Ausgangsspannung bereitstellen. Da der Arbeitspunkt des zweiten Meßverstärkers durch den Ausgang des ersten Meßverstärkers bestimmt wird, erfolgt die Differenzbildung automatisch immer symmetrisch zum eingestellten Arbeitspunkt. Damit ist die Messung durch die erfindungsgemäße Schaltungsanordnung in vorteilhafter Weise unabhängig von technologisch bedingten Toleranzen der Bauteile, alterungsbedingten Schwellspannungsdriften oder Schwankungen der Betriebsparameter, wie z.B. Temperaturänderungen oder Änderungen der Betriebsspannung. Die erfindungsgemäße Schaltungsanordnung läßt sich weiterhin z.B. als CMOS-Schaltung in einem modifizierten Standard-Prozeß zusammen mit den ISFET-Sensoren auf einem Chip integrieren, so daß damit Messungen auf kleinstem Raum möglich sind.

Bei einer besonders vorteilhaften Ausführungsform der erfindungsgemäßen Schaltungsanordnung nach Anspruch 2 werden in den Eingangsstufen der beiden Meßverstärker jeweils zwei für die zu messende lonensorte unterschiedlich empfindliche ISFETs eingesetzt. Mit dieser Schaltungsanordnung lassen sich die Vorteile bei der Bestimmung der Ionenkonzentration mit unterschiedlich empfindlichen ISFETs mit den bereits oben angegebenen Vorteilen der erfindungsgemäßen Schaltungsanordnung verbinden.

In Anspruch 3 wird eine Variante der erfindungsgemäßen Schaltungsanordnung beschrieben, bei der in den Eingangsstufen der beiden Meßverstärker jeweils zwei gleich empflindliche ISFETs eingesetzt werden. Mit dieser Anordnung ist es in vorteilhafter Weise möglich, örtliche Konzentrationsunterschiede in einer elektrolytischen Lösung (z. B. in einer Kapillare) zu erfassen.
Bei der Messung werden die beiden ISFETs des zweiten Meßverstärkers getrennt an zwei unterschiedlichen Orten in der zu messenden Lösung angeordnet. Die beiden ISFETs des ersten Meßverstärkers können z. B. zusammen mit der Referenzelektrode zentral zwischen den Positionen der beiden ISFETs des zweiten Meßverstärkers angeordnet sein. Sind die lonenkonzentrationen an den beiden Orten der ISFETs des zweiten Meßverstärkers identisch, so liegt keine Spannung (U ≠ OV) am Ausgang der erfindungsgemäßen Schaltungsanordnung an.
Bei Konzentrationsunterschieden erhält man ein entsprechendes Ausgangssignal.

In einer bevorzugten Ausführungsform der erfindungsgemäßen Schaltungsanordnung setzt sich der erste Meßverstärker nach Anspruch 4 aus einer bekannten Operationsverstärkerschaltung zusammen, bei der die Eingangsdifferenzstufe durch eine Anordnung aus zwei Differenzverstärkerstufen ersetzt ist. Diese Differenzverstärkerstufen bestehen jeweils aus einer Stromquelle, einem FET und einem ISFET, die in folgender Weise verschaltet sind:
Die Sourceanschlüsse der FETs und der ISFETs sind jeweils mit der Stromquelle, die Drainanschlüsse der ISFETs mit einem für beide Differenzverstärker gemeinsamen Lastelement, die Drainanschlüsse der FETs mit einem zweiten für beide Differenzverstärker gemeinsamen Lastelement, und die Gateanschlüsse der beiden FETs mit dem Bezugspotential (Masse) verbunden.
Die Verbindungen der Lastelemente mit den Drainanschlüssen der ISFETs und FETs sind so in die Operationsverstärkerschaltung eingebunden, daß ausgehend von den Drainanschlüssen der FETs bis zum Ausgang des Verstärkers ein negatives Vorzeichen der Verstärkung und ausgehend von den Drainanschlüssen der ISFETs bis zum Ausgang des Verstärkers ein positives Vorzeichen der Verstärkung auftritt.

Anspruch 5 bezieht sich auf eine bevorzugte Ausführungsform der erfindungsgemäßen Schaltungsanordnung, bei der sich der zweite Meßverstärker aus einer bekannten Operationsverstärkerschaltung zusammensetzt, bei der die Eingangsdifferenzstufe durch eine Anordnung aus zwei Differenzverstärkerstufen ersetzt ist. Diese Differenzverstärkerstufen bestehen jeweils aus einer Stromquelle, einem FET und einem ISFET, die in folgender Weise verschaltet sind:
Die Sourceanschlüsse der FETs und der ISFETs sind jeweils mit der Stromquelle, die Drainanschlüsse des ISFET des ersten Differenzverstärkers und des FET des zweiten Differenzverstärkers mit einem gemeinsamen Lastelement, und die Drainanschlüsse des FET des ersten Differenzverstärkers und des ISFET des zweiten Differenzverstärkers mit einem zweiten gemeinsamen Lastelement verbunden. Der Gateanschluß des ersten FET ist mit dem Bezugspotential (Masse), der Gateanschluß des zweiten FET mit dem Ausgang des Verstärkers verbunden.
Die Verbindungen der Lastelemente mit den Drainanschlüssen der ISFETs und FETs sind so in die Operationsverstärkerschaltung eingebunden, daß ausgehend vom Verbindungspunkt des ersten Lastelementes mit den Drainanschlüssen bis zum Ausgang des Verstärkers ein negatives Vorzeichen der Verstärkung und ausgehend vom Verbindungspunkt des zweiten Lastelementes mit den Drainanschlüssen bis zum Ausgang des Verstärkers ein positives Vorzeichen der Verstärkung auftritt.

In besonderer Ausgestaltung gemäß Anspruch 6 der erfindungsgemäßen Schaltungsanordnung werden layoutgleiche FETs und ISFETs verwendet. Die vier identischen FETs sind so dimensioniert, daß sie etwa die gleiche Steilheit wie die vier ISFETs aufweisen. Die vier identischen Ströme der Stromquellen werden so eingestellt, daß die Arbeitspunkte der ISFETs und FETs tief im aktiven Bereich liegen.

Eine bevorzugte Ausführungsform der Erfindung ergibt sich, wenn gemäß Anspruch 7 als Feldeffekttransistoren (FETs) MOSFETs eingesetzt werden.

In weiterer Ausgestaltung der erfindungsgemäßen Schaltungsanordnung nach Anspruch 8 werden die Ströme der Stromquellen durch eine Strombank aus MOSFETs bereitgestellt.

Anspruch 9 stellt eine bevorzugte Ausführungsform der erfindungsgemäßen Schaltungsanordnung dar, bei der die Referenzelektrode aus einem elektrisch gut leitfähigen und gegenüber der elektrolytischen Lösung chemisch resistenten Material, wie z. B. Gold oder Platin besteht.

Eine weitere Ausführungsform nach Anspruch 10 der Erfindung ergibt sich, indem die erfindungsgemäße Schaltungsanordnung als CMOS-Schaltung ausgeführt und in einem modifizierten Standard-Prozeß zusammen mit den ISFETs auf einem Chip integriert wird. Damit sind mit der erfindungsgemäßen Schaltungsanordnung Messungen auf kleinstem Raum möglich.

Anspruch 11 bezieht sich auf den Einsatz der erfindungsgemäßen Schaltungsanordnung für die Prüfung von ISFETs. Während bei Verwendung identischer ISFETs am gleichen Ort in einer elektrolytischen Lösung die Schwellspannungsdifferenz Null beträgt, lassen sich Unterschiede der ISFETs, die z. B. auf technologische Parameterschwankungen beim Herstellungsprozeß zurückzuführen sind, durch eine am Ausgang der Schaltungsanordnung anliegende Spannung (U ≠ OV) nachweisen. Eine Prüfung der ISFETs auf identische Parameter ist damit möglich.

### Weg zur Ausführung der Erfindung:

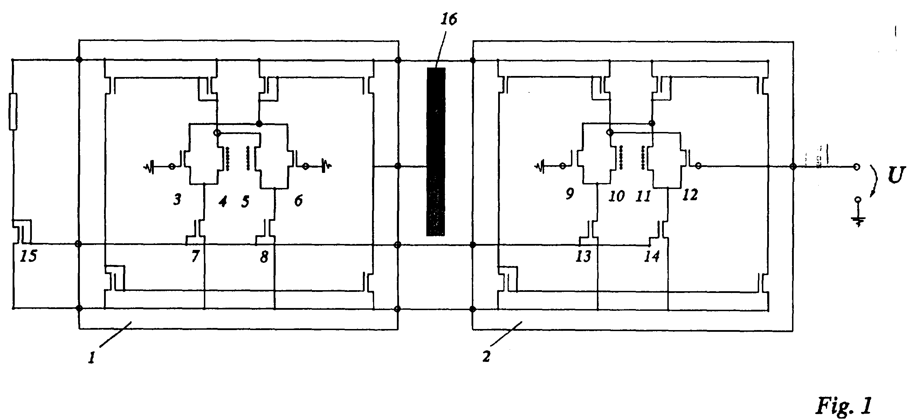

Die erfindungsgemäße Schaltungsanordnung wird nun in einem Ausführungsbeispiel anhand der Zeichnung näher erläutert.
Diese zeigt ein Beispiel für die erfindungsgemäße Schaltungsanordnung der zwei Meßverstärker, die hier in CMOS-Technik nach dem Prinzip des OTA (operational transconductance amplifier) ausgeführt sind. Die Ströme zum Betrieb der beiden Meßverstärker 1 und 2 werden durch eine Strombank aus den MOSFETs 7, 8, 13, 14 und 15 bereitgestellt. Die Meßverstärker 1 und 2 unterscheiden sich nur in der Verschaltung ihrer Eingangsstufen. Bei der Eingangsstufe des Meßverstärkers 1 handelt es sich um die ein- und ausgangsseitige Parallelschaltung zweier Differenzverstärker aus MOSFET 3 bzw. 6 und ISFET 4 bzw. 5, wobei die beiden ISFETs 4 und 5 unterschiedliche Empfindlichkeiten besitzen können. Die Einbindung der Differenzstufen in die OTA-Schaltung erfolgt so, daß die Gates der MOSFETs den positiven Eingang der Verstärkeranordnung bilden. Den negativen Eingang des Verstärkers bilden die Gates der ISFETs, deren gemeinsamer elektrischer Anschluß durch die in der elektrolytischen Lösung befindliche Elektrode 16 gebildet wird. Als Elektroden können elektrisch gut leitfähige und chemisch resistente Materialien wie z. B. Gold oder Platin eingesetzt werden. Durch Verbindung der Referenzelektrode 16 mit dem Ausgang des Meßverstärkers 1 wird dieser voll gegengekoppelt und arbeitet als Spannungsfolger bezogen auf den positiven Eingang, der mit dem Bezugspotential (Masse) verbunden ist. Damit stellt sich am Ausgang die Offsetspannung der Gesamtanordnung ein, die bei weitestgehend symmetrischem Aufbau genau den Wert der Differenz aus der Schwellspannung der MOSFETs und dem Mittelwert der Schwellspannungen der ISFETs annimmt.
Im Meßverstärker 2 sind die Differenzanordnungen aus MOSFET 9 bzw. 12 und ISFET 10 bzw. 11 so verschaltet, daß der Gateanschluß des MOSFET 9 einen positiven Eingang des Verstärkers und das Gate des MOSFET 12 einen negativen Eingang bildet. Den gemeinsamen elektrischen Gateanschluß der ISFETs 10 und 11 stellt wiederum die Referenzelektrode 16 dar, die auf der vom Meßverstärker 1 geregelten Spannung liegt. Signalmäßig stellt die Referenzelektrode in der elektrolytischen Lösung für den Meßverstärker 2 einen Gleichtakteingang dar. Durch Gegenkopplung des Verstärkers 2 als Spannungsfolger und Verbinden des positiven Eingangs mit Bezugspotential entsteht an dessen Ausgang die durch die ISFETs 10 und 11 eingeprägte Schwellspannungsdifferenz, die dem Meßsignal entspricht.
Durch die Wahl des Arbeitspunktes der Differenztransistoren 3...6 und 9...12 im aktiven Bereich und dadurch, daß die Differenzbildung immer symmetrisch zu dem durch den Verstärker 1 vorgegebenen Gleichtaktarbeitspunkt erfolgt, wird erreicht, daß die durch die quadratischen Kennlinien der FETs bedingten Nichtlinearitäten ausreichend unterdrückt werden. Dadurch ist es möglich, auch bei Steilheitsunterschieden zwischen ISFET und MOSFET von bis zu 30% den Fehler des Sensorausgangssignales unter 0,5% zu halten.

## Patentansprüche

1. Anordnung zur Messung von Ionenkonzentrationen in Lösungen mit ionensensitiven Feldeffekttransistoren (ISFETs), einer gemeinsamen Referenzelektrode in der Lösung und einem Ausgang, an welchem das Sensorsignal abgreifbar ist,
**dadurch gekennzeichnet,**
daß die Anordnung zwei Meßverstärker (1,2) aufweist, in deren Eingangsstufen jeweils zwei ISFETs (4,5 und 10,11) und zwei identische FETs (3,6 und 9,12) derart verschaltet sind, daß die Ausgangsspannung des ersten Meßverstärkers (1) der Differenz aus dem Mittelwert der beiden lSFET-Schwellspannungen und der FET-Schwellspannung und die Ausgangsspannung des zweiten Meßverstärkers (2) der Differenz der beiden ISFET-Schwellspannungen entspricht, wobei die FETs (3,6) und ISFETs (4,5) des ersten Meßverstärkers (1) identisch denen des zweiten Meßverstärkers (2) sind, der Ausgang des ersten Meßverstärkers (1) mit der gemeinsamen Referenzelektrode (16) der vier ISFETs verbunden ist, und die Ausgangsspannung des zweiten Meßverstärkers dem Sensorsignal entspricht.

2. Anordnung nach Anspruch 1,
**dadurch gekennzeichnet,**
daß die beiden ISFETs (4,5 und 10,11) eines jeden Meßverstärkers (1, 2) jeweils unterschiedliche Empfindlichkeit aufweisen.

3. Anordnung nach Anspruch 1,
**dadurch gekennzeichnet,**
daß die beiden ISFETs (4,5 und 10,11) eines jeden Meßverstärkers (1, 2) jeweils gleiche Empfindlichkeit aufweisen.

4. Anordnung nach einem der Ansprüche 1 bis 3,
**dadurch gekennzeichnet,**
daß sich der erste Meßverstärker (1) aus einer Operationsverstärkerschaltung zusammensetzt, bei der die Eingangsdifferenzstufe durch eine Anordnung aus zwei Differenzverstärkerstufen ersetzt ist, die aus jeweils einer Stromquelle (7,8) sowie einem FET (3,6) und einem ISFET (4,5) bestehen, deren Sourceanschlüsse mit der Stromquelle und deren Drainanschlüsse mit zwei für beide Differenzverstärker gemeinsamen Lastelementen verbunden sind, wobei beide FETs an das eine und beide ISFETs an das andere Lastelement angeschlossen sind, die Gateanschlüsse der beiden FETs mit dem Bezugspotential verbunden sind, und die Verbindungspunkte der Lastelemente mit den Drainanschlüssen so in die Operationsverstärkerschaltung eingebunden sind, daß ausgehend von den Drainanschlüssen der FETs bis zum Ausgang des Verstärkers ein negatives Vorzeichen der Verstärkung und ausgehend von den Drainanschlüssen der ISFETs bis zum Ausgang des Verstärkers ein positives Vorzeichen der Verstärkung auftritt.

5. Anordnung nach einem der Ansprüche 1 bis 4,
**dadurch gekennzeichnet,**
daß sich der zweite Meßverstärker (2) aus einer Operationsverstärkerschaltung zusammensetzt, bei der die Eingangsdifferenzstufe durch eine Anordnung aus zwei Differenzverstärkerstufen ersetzt ist, die aus jeweils einer Stromquelle (13,14) sowie einem FET (9,12) und einem ISFET (10,11) bestehen, deren Sourceanschlüsse mit der Stromquelle und deren Drainanschlüsse mit zwei für beide Differenzverstärker gemeinsamen Lastelementen verbunden sind, wobei der FET des ersten Differenzverstärkers und der ISFET des zweiten Differenzverstärkers an das erste Lastelement und der ISFET des ersten Differenzverstärkers und der FET des zweiten Differenzverstärkers an das zweite Lastelement angeschlossen sind, der Gateanschluß des ersten FET mit dem Bezugspotential, der Gateanschluß des zweiten FET mit dem Ausgang des Verstärkers verbunden ist, und die Verbindungen der Lastelemente mit den Drainanschlüssen so in die Operationsverstärkerschaltung eingebunden sind, daß ausgehend vom Verbindungspunkt des ersten Lastelements mit den Drainanschlüssen bis zum Ausgang des Verstärkers ein negatives Vorzeichen der Verstärkung und ausgehend vom Verbindungspunkt des zweiten Lastelements mit den Drainanschlüssen bis zum Ausgang des Verstärkers ein positives Vorzeichen der Verstärkung auftritt.

6. Anordnung nach einem der Ansprüche 4 oder 5,
**dadurch gekennzeichnet,**
daß layoutgleiche FETs und ISFETs eingesetzt werden,
daß die vier identischen FETs so dimensioniert sind, daß sie etwa die gleiche Steilheit wie die ISFETs aufweisen, und
daß die vier identischen Ströme der Stromquellen so gewählt sind,
daß die Arbeitspunkte der ISFETs und FETs tief im aktiven Bereich liegen.

7. Anordnung nach einem der Ansprüche 1 bis 6,
**dadurch gekennzeichnet,**
daß als FETs MOSFETs eingesetzt werden.

8. Anordnung nach einem der Ansprüche 1 bis 7,
**dadurch gekennzeichnet,**
daß die Ströme der Stromquellen durch eine Strombank aus MOSFETs (15,7,8,13,14) bereitgestellt werden.

9. Anordnung nach einem der Ansprüche 1 bis 8,
**dadurch gekennzeichnet,**
daß die Referenzelektrode (16) aus einem elektrisch gut leitfähigen und chemisch resistenten Material besteht.

10. Anordnung nach einem der Ansprüche 1 bis 9,
**dadurch gekennzeichnet,**
daß die Anordnung als CMOS-Schaltung ausgeführt und zusammen mit den ISFETs auf einem Chip integriert ist.

11. Verwendung der Anordnung nach einem der Ansprüche 1 bis 9 für die Prüfung von ISFETs auf identische Parameter.

## Claims

1. Device for measuring ion concentrations in solutions with ion-sensitive field effect transistors (ISFETs), a common reference electrode in the solution and an output from which can be derived a sensor signal, characterised in that the layout has two measuring amplifiers (1, 2), in whose input stages are in each case connected two ISFETs (4, 5 and 10, 11) and two identical FETs (3, 6 and 9, 12) in such a way that the output voltage of the first measuring amplifier (1) corresponds to the difference of the mean value of the two ISFET threshold voltages and the FET threshold voltage, and the output voltage of the second measuring amplifier (2) corresponds to the difference of the two ISFET threshold voltages, in which the FETs (3, 6) and ISFETs (4, 5) of the first measuring amplifier (1) are identical to those of the second measuring amplif ier (2), the output of the first amplifier (1) is connected to the common reference electrode (16) of the four ISFETs and the output voltage of the second amplifier corresponds to the sensor signal.

2. Device according to claim 1, characterised in that the two ISFETs (4,5 and 10,11) of each measuring amplifier (1,2) in each case have different sensitivities.

3. Device according to claim 1, characterised in that the two ISFETs (4, 5 and 10, 11) of each measuring amplifier (1, 2) in each case have the same sensitivity.

4. Device according to one of claims 1 to 3, characterised in that the first measuring amplifier (1) comprises an operational amplifier circuit, in which the input differential stage is replaced by a layout of two differential amplifier stages, which in each case comprise a power source (7, 8) , as well as a FET (3, 6) and an ISFET (4, 5), whose source connections are connected to the power source and whose drain connections are connected to two load elements common to both differential amplifiers, both the FETs being connected to one load element and both the ISFETs to the other load element, the gate connections of the two FETs being connected to reference potential and the connecting points of the load elements to the drain connections being so incorporated into the operational amplifier circuit that, starting from the drain connections of the FETs and extending up to the amplifier output, there is a negative gain sign, and starting from the drain connections of the ISFETs and extending to the amplifier output, there is a positive gain sign.

5. Device according to any one of claims 1 to 4, characterised in that the second measuring amplifier (2) comprises an operational amplifier circuit, in which the input differential stage is replaced by a layout formed from two differential amplifier stages, which in each case comprise a power source (13) , as well as a FET (9, 12) and an ISFET (10, 11) whose source connections are connected to the power source and whose drain connections are connected to two common load elements for both differential amplifiers, the FET of the first differential amplifier and the ISFET of the second differential amplifier being connected to the first load element and the ISFET of the first differential amplifier and the FET of the second differential amplifier to the second load element, the gate connection of the first FET is connected to the reference potential, the gate connection of the second FET to the amplifier output and the connections of the load elements to the drain connections being so incorporated into the operational amplifier circuit that starting from the connection point of the first load element to the drain connections and extending to the amplifier output a negative gain sign occurs and starting from the connecting point of the second load element to the drain connections and extending up to the amplifier output a positive gain sign occurs.

6. Device according to one of claims 4 or 5, characterised in that FETs and ISFETs with the same layout are used, that the four identical FETs are so dimensioned that they have roughly the same transconductance as the ISFETs and in that the four identical currents of the power sources are so selected that the operating points of the ISFETs and FETs are well in the active range.

7. Device according to any one of the claims 1 to 6, characterised in that MOSFETs are used as FETs.

8. Device according to one of claims 1 to 7, characterised in that the currents of the power sources are made available by a bank of MOSFETs (15,7,8,13,14).

9. Device according to any one of claims 1 to 8, characterised in that the reference electrode (16) is made from a good electrically conducting, chemically resistant material.

10. Device according to any one of claims 1 to 9, characterised in that the layout is in the form of a CMOS circuit and, together with the ISFETs, is integrated on one chip.

11. Utilisation of the layout according to any one of the claims 1 to 9 for testing ISFETs for identical parameters.

## Revendications

1. Dispositif permettant de mesurer la concentration d'ions dans des solutions avec des transistors à effet de champ sensitifs aux ions (ISFETs), une électrode de référence commune dans la solution et une sortie, sur laquelle le signal d'un capteur peut être prélevé,
caractérisé en ce que
le dispositif comporte deux amplificateurs de mesure (1, 2), dans les étages d'entrée desquels sont branchés respectivement deux ISFETs (4, 5 et 10, 11) de façon, que la tension de sortie du premier amplificateur de mesure (1) corresponde à la différence de la valeur moyenne des deux tensions de seuil d'ISFET et de la tension de seuil de FET et que la tension de sortie du deuxième amplificateur de mesure (2) corresponde à la différence des deux tensions de seuil d'ISFET, tandis que les FETs (3, 6) et ISFETs (4, 5) du premier amplificateur de mesure (1) sont identiques à ceux du deuxième amplificateur de mesure (2), la sortie du premier amplificateur de mesure (1) est reliée à l'électrode de référence (16) commune des quatre ISFETs, et la tension de sortie du deuxième amplificateur de mesure correspond au signal du capteur.

2. Dispositif selon la revendication 1,
caractérisé en ce que
les deux ISFETs (4, 5 et 10, 11) de chacun des amplificateurs de mesure (1, 2) ont respectivement une sensibilité différente.

3. Dispositif selon la revendication 1,
caractérisé en ce que
les deux ISFETs (4, 5 et 10, 11) de chacun des amplificateurs de mesure (1, 2) ont respectivement une sensibilité égale.

4. Dispositif selon une des revendications 1 à 3,
caractérisé en ce que
le premier amplificateur de mesure (1) se compose d'un montage d'amplificateur opérationnel, dans lequel l'étage différenciateur d'entrée est remplacé par un dispositif de deux étages d'amplificateurs différenciateurs, qui sont composés respectivement d'une source de courant (7, 8) ainsi que d'un FET (3, 6) et d'un ISFET (4, 5), dont les bornes de source sont reliées à la source de courant et dont les bornes de drain sont reliées à deux éléments de charge communs aux deux amplificateurs différenciateurs, tandis que les deux FETs sont raccordés à l'un et les deux ISFETs à l'autre élément de charge, les raccordements de porte des deux FETs sont reliés au potentiel de référence et les points de jonction des éléments de charge avec les bornes du drain sont reliés aux bornes de drain dans le circuit amplificateur opérationnel de sorte, que partant des bornes du drain des FETs jusqu'à la sortie de l'amplificateur, il se produit un signe négatif de l'amplification et partant des bornes du drain des ISFETs jusqu'à la sortie de l'amplificateur, il se produit un signe positif de l'amplification.

5. Dispositif selon une des revendications 1 à 4,
caractérisé en ce que
le deuxième amplificateur de mesure (2) se compose d'un montage d'amplificateur opérationnel, dans lequel l'étage différenciateur d'entrée est remplacé par un dispositif de deux étages d'amplificateurs différenciateurs, qui se composent respectivement d'une source de courant (13, 14) ainsi que d'un FET (9, 12) et d'un ISFET (10, 11), dont les bornes de source sont reliées à la source de courant et dont les bornes de drain sont reliées à deux éléments de charge communs aux deux amplificateurs différenciateurs, tandis que le FET du premier amplificateur différenciateur et le ISFET du deuxième amplificateur différenciateur sont raccordés au premier élément de charge et le ISFET du premier amplificateur différenciateur et le FET du deuxième amplificateur différenciateur au deuxième élément de charge, la borne de porte du premier FET est reliée au potentiel de référence, la borne de porte du deuxième FET à la sortie de l'amplificateur, et les liaisons des éléments de charge sont liées avec les bornes de drain dans le circuit d'amplificateur opérationnel de sorte, qu'en partant du point de liaison du premier élément de charge avec les bornes de drain jusqu'à la sortie de l'amplificateur, il se produit un signe négatif de l'amplification et en partant du point de liaison du deuxième élément de charge avec les bornes du drain jusqu'à la sortie de l'amplificateur, il se produit un signe positif de l'amplification.

6. Dispositif selon une des revendications 4 ou 5,
caractérisé en ce que
les FETs et ISFETs égaux en implantation sont mis en oeuvre, en ce que les quatre FETs identiques sont dimensionnés de sorte, qu'ils comportent la même pente que les ISFETs, et en ce que les quatre courants identiques des sources de courant sont choisis, de façon que les points de fonctionnement des ISFETs et des FETs se situent bas dans le domaine actif.

7. Dispositif selon une des revendications 1 à 6,
caractérisé en ce que
comme FETs, des MOSFETs sont mis en oeuvre.

8. Dispositif selon une des revendications 1 à 7,
caractérisé en ce que
les courants des sources de courant sont mis à disposition par un siège de courant à partir des MOSFETs (15, 7, 8, 13, 14).

9. Dispositif selon une des revendications 1 à 8,
caractérisé en ce que
l'électrode de référence (16) est composée d'un matériau bon conducteur électrique et chimiquement résistant.

10. Dispositif selon une des revendications 1 à 9,
caractérisé en ce que
le dispositif est réalisé en circuit CMOS et est intégré en commun avec les ISFETs sur une puce.

11. Utilisation du dispositif selon une des revendications 1 à 9, pour le contrôle des ISFETs sur des paramètres identiques.
